# EUROPÄISCHE PATENTSCHRIFT

(11) **EP 3 433 001 B1**
(45) Veröffentlichungstag und Bekanntmachung des Hinweises auf die Patenterteilung: **08.07.2020**
(21) Anmeldenummer: 17719477.6
(22) Anmeldetag: 20.03.2017
(51) Int. Cl.: B01D 27/08

(54) **FILTEREINRICHTUNG FÜR EINE FILTERANLAGE EINES KRAFTWAGENS**
FILTER DEVICE FOR A FILTER SYSTEM OF A MOTOR VEHICLE
DISPOSITIF FILTRANT POUR UNE INSTALLATION DE FILTRATION D'UN VÉHICULE AUTOMOBILE

(30) Priorität: 24.03.2016 DE 102016003699
(43) Veröffentlichungstag der Anmeldung: 30.01.2019
(73) Patentinhaber: Daimler AG, 70372 Stuttgart (DE)
(72) Erfinder: SCHUMACHER, Eric, 55411 Bingen (DE)
(74) Vertreter: JENSEN & SON
(86) Internationale Anmeldenummer: PCT/EP2017/000353
(87) Internationale Veröffentlichungsnummer: WO 2017/162330

(56) Entgegenhaltungen:
- EP-A2- 0 221 675
- WO-A1-2015/091665
- DE-A1-102014 009 327

## Beschreibung

Die Erfindung betrifft ein Filterelement für die Filtereinrichtung einer Filteranlage eines Kraftwagens gemäß dem Oberbegriff des Patentanspruchs 1. Des Weiteren betrifft die Erfindung eine entsprechende Filtereinrichtung.

Derartige Filtereinrichtungen sind insbesondere als Lufttrocknereinrichtungen für Druckluftanlagen für Bremsanlagen von Lastkraftwagen bekannt. Dabei umfassen derartige Filtereinrichtungen üblicherweise ein Filterelement, welches an einem Filtermodul befestigt ist und von Zeit zu Zeit zum Austausch entsprechender Komponenten abgenommen werden kann. Hierbei wird bislang das Filterelement durch eine Drehbewegung um eine Mittelachse in eine Drehrichtung am Filtermodul befestigt und in die entgegengesetzte Drehrichtung von diesem gelöst. Dabei ist bislang auf Seiten des Filtermoduls ein zentraler, koaxial zum Filterelement angeordneter Rohrstutzen mit Außengewinde vorgesehen, auf welchen das Filterelement mit einem in dessen Boden angeordneten zentralen Innengewinde aufgeschraubt beziehungsweise von diesem abgeschraubt werden kann. Diese Verschraubung ist nicht nur in der Montage relativ zeitaufwendig, sondern überdies muss damit ein genaues Drehmoment zwischen dem Filterelement und dem Filtermodul erzeugt werden, um eine hinreichende Abdichtung zwischen den Bauteilen zu erreichen. Dies macht ein spezielles Werkzeug notwendig, um ein erforderliches Drehmoment aufzubringen.

Darüber hinaus ist aus der DE 8228745 U1 eine Lufttrocknungseinrichtung für DruckluftBremsanlagen von Fahrzeugen bekannt. Diese Lufttrocknungseinrichtung umfasst eine Lufttrocknerkartusche, welche mittels eines außenumfänglich der Verbindungsfläche angebrachten Bajonettverschlusses an einem Lufttrocknermodul befestigbar ist.

Die EP 0 221 675 A2 offenbart ein Filtermodul für eine Filtereinrichtung einer Filteranlage eines Kraftwagens, mit einer Mehrzahl von Befestigungsmitteln, an welchen jeweils korrespondierende Befestigungsmittel eines Filterelements mittels einer durch eine bogenförmige Nut im Boden des Filterelements geführten Drehbewegung des Filterelements um eine Mittelachse in eine Drehrichtung unter Ausbildung eines Bajonettverschlusses befestigbar ist, und von welchem das korrespondierende Befestigungsmittel des Filterelements durch eine Drehbewegung des Filterelements um die Mittelachse in eine entgegengesetzte Drehrichtung wieder lösbar ist.

Die WO 2015 091 665 A1 offenbart ebenfalls eine Filtereinrichtung mit einem Filtermodul und daran befestigbarem Filterelement, beide ausgestattet mit geschwungenen federzungenartigen Verbindungsteilen, die aus der Horizontalen schräg in axialer Richtung vom Filtermodul bzw. vom Filterelement abragen und bajonettartig gegeneinander verrastbar sind.

Aufgabe der vorliegenden Erfindung ist es, ein Filterelement und eine Filtereinrichtung der eingangs genannten Art zu schaffen, mittels welchen sich eine verbesserte Montage und Abdichtung innerhalb der Filtereinrichtung erzielen lässt.

Diese Aufgabe wird erfindungsgemäß durch ein Filterelement mit den Merkmalen des Patentanspruchs 1 und durch eine Filtereinrichtung mit den Merkmalen des Patentanspruchs 3 gelöst. Vorteilhafte Ausgestaltungen mit zweckmäßigen Weiterbildungen der Erfindung sind Gegenstand der abhängigen Patentansprüche.

Um ein Filterelement zu schaffen, welches besonders einfach montierbar ist und eine hohe Dichtigkeit aufweist, ist es gemäß Patentanspruch 1 vorgesehen, dass die Befestigungsmittel des Filterelements als bogenförmige Führungsnuten im Boden des Filterelements ausgebildet sind, welche an einem Ende eine Einführöffnung und am anderen Ende eine Rastkontur für einen korrespondierenden Kopfbolzen als Befestigungsmittel des Filtermoduls aufweisen, und dass ein Randbereich der jeweiligen bogenförmigen Führungsnut von der Einführöffnung zur Rastkontur hin eine Steigung aufweist. Bei demFilterelement handelt es sich insbesondere um eine Lufttrocknerkartusche einer Lufttrocknereinrichtung einer Druckluftanlage eines Lastkraftwagens, welche mittels des Bajonettverschlusses mit einem Lufttrocknermodul der Lufttrocknereinrichtung verbunden wird. Der Bajonettverschluss ermöglicht einerseits eine weitaus schnellere Montage beziehungsweise Demontage des Filterelements und des Filtermoduls und andererseits eine hohe Dichtigkeit der Filtereinrichtung, da die jeweiligen, auf Seiten des Filtermoduls und auf Seiten des Filterelements angeordneten Befestigungsmittel in einfacher Weise so aufeinander abgestimmt werden können, dass sich stets eine gleichbleibende beziehungsweise reproduzierbare Dichtkraft ergibt, welche auf die Dichtung zwischen dem Filterelement und dem Filtermodul wirkt. Eine derartige axiale Dichtkraft ist ersichtlicher Weise weitaus leichter einstellbar als mittels der im Stand der Technik bekannten Schraubverbindung von Filterelement und Filtermodul, da dort ein separates Werkzeug eingesetzt beziehungsweise eine separate Einstellung des Drehmoments erfolgen muss. Dies ist im vorliegenden Fall durch die Verwendung jeweiliger Befestigungsmittel auf Seiten des Filterelements und des Filtermoduls zur Ausbildung des Bajonettverschlusses nicht der Fall, sondern vielmehr können diese Elemente durch Wahl einer geeigneten Geometrie reproduzierbar so aufeinander abgestimmt werden, dass sich stets dieselben Dichtkräfte ergeben.

Dabei hat es sich als vorteilhaft gezeigt, wenn die Befestigungsmittel der Lufttrocknerkartusche als die bogenförmigen Führungsnuten ausgebildet sind, welche an einem Ende die Einführöffnung und am anderen Ende die Rastkontur für den korrespondierenden Kopfbolzen als Befestigungsmittel des Lufttrocknermoduls aufweisen. Somit ist ein Bajonettverschluss gewährleistet, welcher einerseits ein einfaches Einführen der jeweiligen Kopfbolzen an den Führungsnuten ermöglicht und andererseits eine sichere Festlegung dieser Kopfbolzen in den jeweiligen Endlagen an den Führungsnuten gewährleistet.

Darüber hinaus weist der Randbereich der jeweiligen bogenförmigen Führungsnut von der Einführungsöffnung zur Rastkontur hin eine ansteigende Steigung auf. Hierdurch kann beim Befestigen beziehungsweise bei Durchführung der Drehbewegung der Lufttrocknerkartusche zu dessen Befestigung kontinuierlich eine Dichtkraft gesteigert werden, bis die entsprechende Endposition der Lufttrocknerkartusche erreicht ist.

Eine vorteilhafte Ausführungsform der Erfindung sieht vor, dass unterseitig eines die bogenförmigen Führungsnuten aufweisenden Bodens ein Stützelement mit einer Dichtung vorgesehen ist. Durch dieses Stützelement wird eine besonders gleichmäßige Dichtkraft erzeugt.

Die vorstehend im Zusammenhang mit dem erfindungsgemäßen Filterelement beschriebenen Vorteile ergeben sich in eben solcher Weise für die Filtereinrichtung gemäß Patentanspruch 3.

In weiterer Ausgestaltung der Filtereinrichtung hat es sich dabei als vorteilhaft gezeigt, wenn an dem Filterelement und an dem Filtermodul miteinander zusammenwirkende Rastmittel vorgesehen sind, mittels welchen das Filterelement in einer befestigten Endstellung an dem Filtermodul gesichert ist. Somit kann ein unbeabsichtigtes Lösen des Bajonettverschlusses zwischen dem Filterelement und dem Filtermodul zuverlässig verhindert werden.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1a, 1b, 1c: jeweilige ausschnittsweise Perspektivansichten auf eine Lufttrocknerkartusche und ein Lufttrocknermodul einer Lufttrocknereinrichtung, wobei eine Abfolge der Montage der Lufttrocknerkartusche an dem Lufttrocknermodul gezeigt ist und wobei in den Fig. 1b und 1c eine jeweilige Verbindung eines entsprechenden Kopfbolzens des Lufttrocknermoduls mit einer bogenförmigen Führungsnut im Boden der Lufttrocknerkartusche im entriegelten und im verriegelten Zustand im Detail gezeigt ist;
- Fig. 2: eine ausschnittsweise und perspektivische Schnittdarstellung des Bodens der Lufttrocknerkartusche im Bereich einer der Führungsnuten, wobei eine Steigung von einer Einführöffnung bis zu einer Rastkontur erkennbar ist;
- Fig. 3: eine ausschnittsweise Perspektivansicht sowie eine perspektivisch geschnittene Detailansicht einer der bogenförmigen Führungsnuten im Boden der Lufttrocknerkartusche, wobei im Detail das Zusammenwirken einer Rastkontur der Führungsnut mit dem zugehörigen Kopfbolzen des Lufttrocknermoduls erkennbar ist;
- Fig. 4: eine ausschnittsweise und perspektivische Schnittansicht des an dem Lufttrocknermodul befestigten Bodens der Lufttrocknerkartusche, wobei insbesondere die Abdichtung der Lufttrocknerkartusche gegen das Lufttrocknermodul erkennbar ist; und
- Fig. 5a, 5b: jeweilige Perspektivansichten der Lufttrocknereinrichtung vor und nach der Montage, wobei insbesondere jeweilige zusammenwirkende Rastmittel erkennbar sind, mittels welchen die Lufttrocknerkartusche in der befestigten Endstellung an dem Lufttrocknermodul gesichert ist.

Im Folgenden ist eine beispielhafte Ausführungsform des Filterelements, welches austauschbar ist und zur Filterung fluidischer oder gasförmiger Medien dienen kann, der Filtereinrichtung als eine Lufttrocknerkartusche 10 einer Lufttrocknereinrichtung beschrieben. Die Beschreibung der Lufttrocknereinrichtung als beispielhafte Filtereinrichtung ist jedoch nicht limitierend zu verstehen. Die Filtereinrichtung kann in verschiedensten Anwendungen genutzt werden. So kann es sich bei dem Filterelement der Filtereinrichtung alternativ um ein Filterelement einer Klimaanlage eines Fahrzeugs handeln, oder auch um ein Filterelement für Öl oder Kraftstoff, das mit einem Anschluss im Durchströmungsquerschnitt zu verbinden ist, und gegen den Anschluss abgedichtet werden soll.

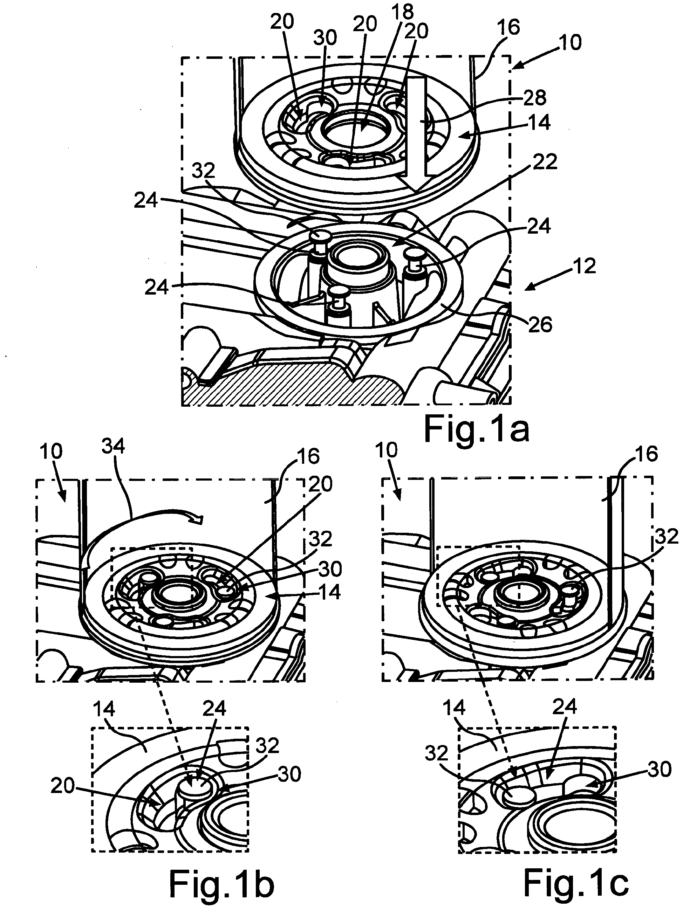

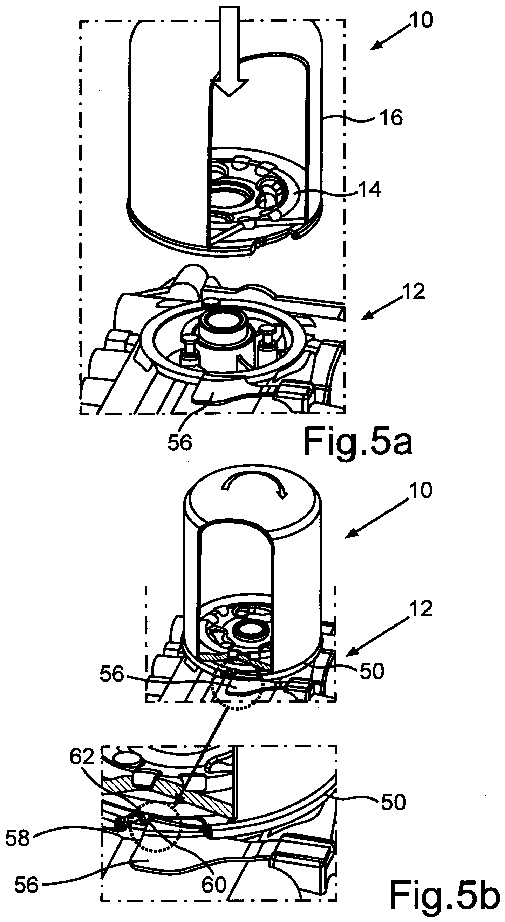

In den Fig. 1a bis 1c sind in einer jeweiligen Perspektivansicht von der Lufttrocknereinrichtung für eine Druckluftanlage einer Bremsanlage eines Lastkraftwagens die Lufttrocknerkartusche 10 und ein Lufttrocknermodul 12 dargestellt. Die Lufttrocknerkartusche 10 ist in ihrer Gesamtheit in den Fig. 5a und 5b in einer jeweiligen Perspektivansicht erkennbar, die im Weiteren noch näher erläutert werden. Dort ist ebenso das Lufttrocknermodul 12 dargestellt.

Fig. 1a zeigt dabei zunächst eine Ausgangsposition bei der Montage der Lufttrocknerkartusche 10, in welcher diese noch nicht am Lufttrocknermodul 12 befestigt ist. Insbesondere erkennbar wird dabei ein Boden 14 der Lufttrocknerkartusche 10 in Form einer Scheibe, an welchem etwa topfförmiger beziehungsweise zylinderförmiger Kartuschenkörper 16 befestigt ist. Innerhalb des Bodens 14 ist dabei ein koaxial zu einer Mittellängsachse der Lufttrocknerkartusche 10 angeordnete zentrale Durchgangsöffnung 18 vorgesehen, welche von drei als Befestigungsmittel ausgebildeten bogenförmigen Führungsnuten 20, welche jeweils in einem Winkel von 120 Grad zueinander angeordnet sind, umgeben ist.

Das Lufttrocknermodul 12 umfasst - wie dies aus Fig. 1a erkennbar ist - ein zentrales Mittellager 22 in Form eines Rohrstutzens, welcher in seinem innenseitigen Außendurchmesser an den Innendurchmesser der Durchgangsöffnung 18 des Bodens 14 der Lufttrocknerkartusche 10 angepasst ist. Des Weiteren ist erkennbar, dass dieses Mittellager 22 von drei als auf Seiten des Lufttrocknermoduls 12 angeordneten Befestigungsmitteln ausgebildeten Kopfbolzen 24 umgeben ist, welche - analog zu den kartuschenseitigen Führungsnuten 20 - ebenfalls in einem Winkel von 120 Grad zueinander angeordnet sind. Diese Kopfbolzen 24 sind wiederum umgeben von einer koaxial zum Mittellager 22 verlaufenden, umlaufenden, ringförmigen Dichtfläche 26, deren Wirkung im Weiteren noch näher erläutert werden wird.

Zur Montage der Lufttrocknerkartusche 10 an dem Lufttrocknermodul 12 wird diese zunächst - als erste Bewegung eines Bajonettverschlusses - gemäß dem Pfeil 28 in Fig. 1a auf das Lufttrocknermodul 12 aufgesetzt. Hierbei weisen die drei Führungsnuten 20 im Boden 14 der Lufttrocknerkartusche 10 jeweilige Einführöffnungen 30 am einen Ende auf, so dass jeweilige, pilzartig vergrößerte Köpfe 32 der Kopfbolzen 24 beim Aufsetzen der Lufttrocknerkartusche 10 diese Einführöffnungen 30 durchsetzen können. Dies wird insbesondere aus Fig. 1b ersichtlich, welche in der oben dargestellten Gesamtansicht zeigt, in welcher Weise die Kopfbolzen 24 der Lufttrocknerkartusche 10 die zugehörigen Einführöffnungen 30 im Boden 14 der Lufttrocknerkartusche 10 durchsetzen. In der unteren Darstellung ist dabei in einer Detailansicht einer der Kopfbolzen 24 gezeigt, welcher die zugehörige Einführöffnung 30 der zugeordneten bogenförmigen Führungsnut 20 durchsetzt.

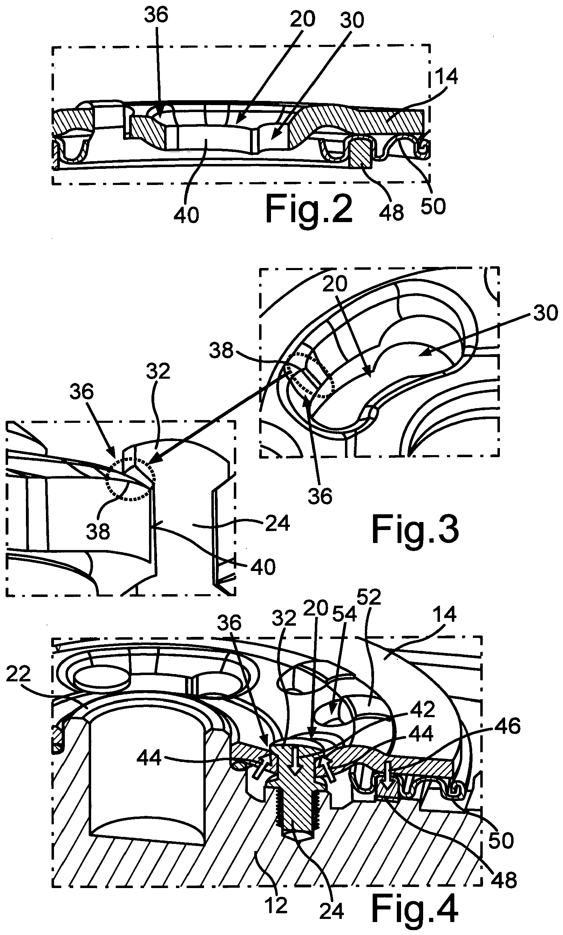

Ausgehend von der in Fig. 1b gezeigten aufgesetzten Position kann nun gemäß dem in Fig. 1b gezeigten Pfeil 34 - als zweite Bewegung eines Bajonettverschlusses - eine Drehbewegung der Lufttrocknerkartusche 10 im Uhrzeigersinn durchgeführt werden, um somit den Bajonettverschluss zwischen den jeweiligen Kopfbolzen 24 und den zugehörigen bogenförmigen Führungsnuten 20 auszubilden. Dabei dient das Mittellager 22 des Lufttrocknermoduls 12, welches mit der Durchgangsöffnung 18 zusammenwirkt, als Drehlager, um welches die Lufttrocknerkartusche 10 verdreht wird. Durch Verdrehen der Lufttrocknerkartusche 10 in Drehrichtung des Uhrzeigersinns werden somit die jeweiligen Kopfbolzen 24 aus der Position gemäß Fig. 1b, in welcher diese die Einführöffnungen 30 durchsetzen, in die in Fig. 1c gezeigte andere Endposition verlagert, in welcher diese in einer in Fig. 3 ausschnittsweise und größer in einer entsprechenden Perspektivansicht dargestellten Rastkontur 36 der zugehörigen Führungsnut 20 aufgenommen sind. Diese Rastkontur 36 wird im Wesentlichen gebildet durch eine jeweilige Rastnocke 38, so dass - wie dies aus Fig. 3 in der links schräg unten dargestellten auszugsweisen Schnittansicht erkennbar ist - der Kopf 32 des zugehörigen Kopfbolzens 24 innerhalb der Rastkontur 36 beziehungsweise durch die Rastnocke 38 gefangen gehalten ist. Insgesamt wird dabei aus Fig. 3 nochmals ersichtlich, dass die jeweilige Führungsnut 20 im Wesentlichen als bogenförmige Schlüssellochkontur gestaltet ist.

Wie des Weiteren aus Fig. 2 erkennbar ist, welche in einer ausschnittsweisen Schnittansicht einen Ringsektor des Bodens 14 der Lufttrocknerkartusche 10 zeigt, weist ein Randbereich 40 der jeweiligen bogenförmigen Führungsnut 20 ausgehend von der zugehörigen Einführöffnung 30 hin zur Rastkontur 36 eine ansteigende Steigung auf, so dass mit Fortschritt der Drehbewegung aus der nicht verrasteten Position gemäß Fig. 1b in die verrastete Position gemäß Fig. 1c eine Anpresskraft erhöht wird, mittels welcher die Lufttrocknerkartusche 10 gegen das Lufttrocknermodul 12 gepresst wird. Hierdurch wird - wie dies aus Fig. 4 in einer ausschnittsweisen und leicht perspektivischen Schnittansicht erkennbar ist - eine Kraft gemäß dem Pfeil 42 erzeugt, welche gegen entsprechende Kräfte gemäß den Pfeilen 44 im Bereich der Rastkontur 36 wirkt. Im Ergebnis wird hierdurch eine Anpresskraft gemäß dem Pfeil 46 erzeugt, mittels welcher eine umlaufende beziehungsweise ringförmige und im Querschnitt etwa rechteckförmige Dichtung 48 gegen die korrespondierende Dichtfläche 26 auf Seiten des Lufttrocknermoduls 12 gepresst wird.

Diese Dichtung 48 ist dabei unterseitig eines umlaufenden und ringförmigen Stützelements 50 in Form eines Stützblechs angebracht, wobei dieses Stützblech unterseitig des Bodens 14 der Lufttrocknerkartusche 10 fixiert ist. Dies erfolgt im vorliegenden Fall mittels einer Mehrzahl von Laschen 52, welche den Boden 14 im Bereich entsprechender Durchgangsöffnungen 54 hintergreifen. Im Ergebnis wird also durch die Steigung im Bereich der jeweiligen Randbereiche 40 der Führungsnuten 20 eine Dichtkraft gemäß dem Pfeil 46 erzeugt, welche die Dichtung 48 gegen die korrespondierende Dichtfläche 26 des Lufttrocknermoduls 12 drückt. Durch das Stützelement 50 wird dabei der Druck vergleichmäßigt.

Anhand der Fig. 5a und 5b ist nochmals die Montage der Lufttrocknerkartusche 10 an dem Lufttrocknermodul 12 erkennbar, wobei Fig. 5a diese beiden Bauteile in unmontiertem und in Fig. 5b in montiertem Zustand zeigen. Im Wesentlichen ist außerdem aus den beiden Fig. 5a und 5b erkennbar, dass außenseitig der Dichtfläche 26 vorliegend ein Rastmittel 56 in Form einer Rastzunge vorgesehen ist, welche - wie dies aus Fig. 5b erkennbar ist - bei Erreichen der befestigten Endstellung der Lufttrocknerkartusche 10 gemäß Fig. 1c mit einer Rastnocke 58 des Stützelements 50 unterseitig des Bodens 14 der Lufttrocknerkartusche 14 als Schnappsicherung hörbar verrastet. Genauer gesagt weist hierzu das Rastmittel 56 eine entsprechende Rastflanke 60 auf, welche mit einer korrespondierenden Rastflanke 62 der Rastnase 58 zusammenwirkt. Durch ein hörbares Klicken oder dergleichen Geräusche wird somit nicht nur die sichere und befestigte Endposition der Lufttrocknerkartusche 10 erreicht, sondern dies auch hörbar dem Monteur zurückgespiegelt. Bei der Demontage kann das Rastmittel 56 entsprechend gegen das Lufttrocknermodul 12 gedrückt beziehungsweise die Verrastung gelöst werden, um somit die Lufttrocknerkartusche 10 entgegen dem Uhrzeigersinn wieder zurück in die in Fig. 1b gezeigte Stellung zu bringen, von welcher aus die Lufttrocknerkartusche 10 vom Lufttrocknermodul 12 abgenommen und beispielsweise vollständig oder aber Komponenten davon ausgetauscht werden können.

Insgesamt ist somit aus den Fig. erkennbar, dass vorliegend eine einfache Möglichkeit mittels entsprechender Befestigungsmittel - einerseits der Kopfbolzen 24 und andererseits der Führungsnuten 20 - geschaffen ist, um zwischen der Lufttrocknerkartusche 10 und dem Lufttrocknermodul 12 durch Verdrehen in die eine Drehrichtung einen entsprechenden Bajonettverschluss herzustellen und durch Verdrehen in die andere Richtung diesen Bajonettverschluss zu lösen, wobei das Aufsetzen, also die Bewegung der Lufttrocknerkartusche 10 in Axialrichtung dadurch bewerkstelligt wird, dass mit der jeweiligen Führungsnut 20 eine entsprechend vergrößerte Einführöffnung 30 vorgesehen ist. Durch den Bajonettverschluss kann nicht nur eine äußerst schnelle Montage erreicht werden, sondern durch die Gestaltung der Führungsnuten 20 und der Kopfbolzen 24 kann eine definierte Kraft (Pfeile 46) erzeugt werden, mittels welcher die Dichtung 48 beaufschlagt und somit die Lufttrocknerkartusche 10 an dem Lufttrocknermodul 12 gehalten wird.

## Patentansprüche

1. Filterelement (10) für eine Filtereinrichtung einer Filteranlage eines Kraftwagens, mit einer Mehrzahl von Befestigungsmitteln (20), mittels welchen das Filterelement (10) durch eine Drehbewegung um eine Mittelachse in eine Drehrichtung an jeweils korrespondierenden Befestigungsmitteln (24) eines Filtermoduls (12) befestigbar zur Ausbildung eines Bajonettverschlusses und durch eine Drehbewegung um die Mittelachse in eine entgegen gesetzte Drehrichtung von dem korrespondierenden Befestigungsmittel (24) des Filtermoduls (12) lösbar ist, wobei die Befestigungsmittel des Filterelements (10) als bogenförmige Führungsnuten (20) im Boden des Filterelements (10) ausgebildet sind, welche an einem Ende eine Einführöffnung (30) aufweisen,
**dadurch gekennzeichnet, dass**
die Führungsnuten (20) am anderen Ende eine Rastkontur (36) für einen korrespondierenden Kopfbolzen (24) als Befestigungsmittel des Filtermoduls (12) aufweisen, und dass ein Randbereich (40) der jeweiligen bogenförmigen Führungsnut (20) von der Einführöffnung (30) zur Rastkontur (36) hin eine Steigung aufweist.

2. Filterelement (10) nach Anspruch 1,
**dadurch gekennzeichnet, dass**
unterseitig eines die bogenförmigen Führungsnuten (24) aufweisenden Bodens (14) ein Stützelement (50) mit einer Dichtung (48) vorgesehen ist.

3. Filtereinrichtung für eine Filteranlage eines Kraftwagens, mit einem Filterelement (10) gemäß einem der vorangehenden Ansprüche, welches durch eine Drehbewegung um eine Mittelachse in eine Drehrichtung an einem Filtermodul (12) befestigbar und durch eine Drehbewegung um die Mittelachse in eine entgegen gesetzte Drehrichtung von dem Filtermodul (12) lösbar ist, mit jeweiligen an dem Filterelement (10) und an dem Filtermodul (12) vorgesehenen und miteinander zur Ausbildung eines Bajonettverschlusses zusammen wirkenden Befestigungsmitteln (20, 24).

4. Filtereinrichtung nach Anspruch 4,
**dadurch gekennzeichnet, dass**
an dem Filterelement (10) und an dem Filtermodul (12) miteinander zusammen wirkende Rastmittel (56, 58) vorgesehen sind, mittels welchen das Filterelement (10) in einer befestigten Endstellung an dem Filtermodul (12) gesichert ist.

## Claims

1. Filter element (10) for a filter device of a filter system of a motor vehicle, having a plurality of fastening means (20), by means of which the filter element (10) can be secured to corresponding fastening means (24) of a filter module (12) by a rotary movement about a central axis in one direction of rotation to form a bayonet lock and can be released from the corresponding fastening means (24) of the filter module (12) by a rotary movement about the central axis in an opposite direction of rotation, wherein
the fastening means of the filter element (10) are designed as curved guide grooves (20) having an insertion opening (30) at one end in the base of the filter element (10),
**characterised in that**
the guide grooves (20) have at the other end a latching contour (36) for a corresponding headed stud (24) as fastening means of the filter module (12), and **in that** an edge region (40) of the respective curved guide groove (20) has an upward gradient from the insertion opening (30) towards the latching contour (36).

2. Filter element (10) according to claim 1,
**characterised in that**
a support element (50) with a seal (48) is provided on the underside of a base (14) having the curved guide grooves (20).

3. Filter device of a filter system of a motor vehicle, having a filter element (10) according to any of the preceding claims, which can be secured to a filter module (12) by a rotary movement about a central axis in one direction of rotation and released from the filter module (12) by a rotary movement about the central axis in an opposite direction of rotation, and having respective fastening means (20, 24) provided at the filter element (10) and the filter module (12) and interacting with each other to form a bayonet lock.

4. Filter device according to claim 3,
**characterised in that**
interacting latching means (56, 58) are provided at the filter element (10) and the filter module (12), by means of which latching means (56, 58) the filter element (10) is secured at the filter module (12) in a fastened end position.

## Revendications

1. Elément filtrant (10) pour un dispositif de filtre d'une installation de filtration d'un véhicule à moteur, comprenant une pluralité de moyens de fixation (20) qui permettent de bloquer l'élément filtrant (10) par un mouvement de rotation autour d'un axe médian dans un sens de rotation sur chacun des moyens de fixation correspondants (24) d'un module de filtre (12) pour former une fermeture à baïonnette et de dévisser par un mouvement de rotation autour de l'axe médian dans un sens de rotation inverse de celui du moyen de fixation (24) correspondant du module de filtre (12), les moyens de fixation de l'élément filtrant (10) étant conçus sous la forme de rainures de guidage arquées (20) dans le fond de l'élément filtrant (10), qui présentent sur une extrémité une ouverture d'insertion (30), **caractérisé en ce que** les rainures de guidage (20) présentent sur l'autre extrémité un contour d'encliquetage (36) pour un boulon à tête correspondant (24) en tant que moyen de fixation du module de filtre (12), et **en ce qu'**une zone marginale (40) de chacune des rainures de guidage arquées (20) présentent depuis l'ouverture d'insertion (30) jusqu'au contour d'encliquetage (36) une inclinaison.

2. Elément filtrant (10) selon la revendication 1, **caractérisé en ce que** sous un fond (14) comportant les rainures de guidage (24) arquées est disposé un élément d'appui (50) doté d'un joint d'étanchéité (48).

3. Dispositif de filtre pour une installation de filtration d'un véhicule à moteur comprenant un élément filtrant (10) selon l'une quelconque des revendications précédentes, qui peut être bloquer par un mouvement de rotation autour d'un axe médian dans un sens de rotation sur un module de filtre (12) et dévisser par un mouvement de rotation autour de l'axe médian dans un sens de rotation contraire du module de filtre (12), comprenant chacun des moyens de fixation (20, 24) disposés sur l'élément filtrant (10) et sur le module de filtre (12) et qui coopèrent pour former une fermeture à baïonnette.

4. Dispositif de filtre selon la revendication 4, **caractérisé en ce que** sur l'élément de filtre (10) et sur le module de filtre (12)) sont disposés des moyens d'encliquetage (56, 58) coopérant ensemble pour fixer l'élément filtrant (10) dans une position finale bloquée sur le module de filtre (12).
